# EUROPEAN PATENT SPECIFICATION

(11) **EP 0 580 315 B1**
(45) Date of publication and mention of the grant of the patent: **24.09.1997**
(21) Application number: 93305285.4
(22) Date of filing: 06.07.1993
(51) Int. Cl.: B60N 2/36, B60N 2/00

(54) **Seat assembly latch mechanism**
Sitzverriegelungseinrichtung
Dispositif de verrouillage pour siège

(30) Priority: 24.07.1992 GB 9215812
(43) Date of publication of application: 26.01.1994
(73) Proprietor: NISSAN EUROPEAN TECHNOLOGY CENTRE LIMITED, Sunderland, Tyne & Wear SR5 3ND (GB)
(72) Inventor: Temple, John, Fillongley, Warwickshire CV2 8BZ (GB); Savill, John, Cranfield, Bedfordshire MK43 OHS (GB)
(74) Representative: Godwin, Edgar James

(56) References cited:
- EP-A- 0 375 636
- WO-A-81/02549
- DE-A- 3 421 564
- FR-A- 2 519 867
- GB-A- 2 169 505
- US-A- 3 915 493
- US-A- 4 008 919

## Description

This invention relates to a latch mechanism for a vehicle seat assembly, in particular (but not solely) for a rear seat assembly having a seat cushion which is mounted on a vehicle body so as to be forwardly tiltable, e.g. so that a seatback can be folded down for the purpose of creating extra space in the rear seat compartment.

In such seat assemblies it is conventional to provide retaining means for holding the seat cushion in the normal position. Such retaining means typically comprise a locking mechanism which has to be released by operating a handle. Often the handle is not necessarily located at a convenient position for access. The locking mechanism is made robust in order to resist the forces likely to be generated when the vehicle is involved in a collision, and it therefore tends to be bulky and expensive. To meet current regulations it is necessary for the retaining means to retain the seat cushion under a deceleration of 20 g.

EP-A-0 375 636 discloses a seat assembly pivotable about a hinge and including a locking mechanism, the hinge axis being arranged at a level higher than that of the locking mechanism. The locking mechanism includes two latch mechanisms to prevent inadvertent tilting of the seat cushion during a collision, one of which is normally disengaged and interposed between the seat cushion and the vehicle body and coupled only when the seat cushion moves forwards as a result of the forces generated in a collision. The other latch mechanism includes a remotely accessible handle to enable release during normal operation of the vehicle. This arrangement can be used in seat assemblies with such a relatively high hinge axis, but for seat assemblies in which the hinge axis is below the level of the latch mechanism, causing a higher degree of tendency for the seat to pivot upwards during rapid deceleration of the vehicle, there remains the risk that the two parts of the normally disengaged latch mechanism will fail to engage with each other, or will fail to engage sufficiently, in a front impact situation, causing the seat cushion to tilt forwards and, hence, throwing the seat occupant, with a risk of injury.

It is evident from the above that the tendency for a seat cushion to tilt in front impact situations can be reduced by raising the tilting axis, but this tends to reduce the forward throw of the seat cushion and therefore to reduce the space available for the seatback when folded down. Whilst large vehicles require sufficient forward throw to accommodate their high seatbacks, small vehicles also require the forward throw to be maximised in order to maximise the seatback height. Forward throw can be maximised by locating the pivot axis of the seat cushion at a low level, by using L-shaped pivot levers, but this exacerbates the problem of forward pivoting of the seat cushion during rapid deceleration. With a seat cushion of limited thickness located in a well area of a rear floor pan, there is little space available to accommodate a latch mechanism with a remote release, such as is described in EP-A-0 375 636.

DE-A-3 421 564 discloses a latch mechanism in accordance with the precharacterising part of claim 1. In this mechanism disengagement of a striker when the seat cushion moves forward is prevented by cooperation between the seat pan and the striker, which is fixed to the floor pan. A spring catch on the seat cushion engages the striker and is disengaged by a remote release.

What is desired is a compact latch mechanism which facilitates engagement and disengagement during normal tilting of the seat cushion providing maximum forward throw but which prevents disengagement when the seat cushion, in its normal position, moves forwards.

The present invention provides a latch mechanism as set forth in claim 1.

The invention also provides a seat assembly in a vehicle body, as set forth in claim 19.

In particular, the catching portion is preferably integral with the leaf spring, and the limiting means may comprise a bracket against which the catching portion abuts when the seat cushion moves forwards from its normal position.

The invention will be described further, by way of example only, with reference to the accompanying drawings, in which:
Figure 1 is a diagrammatic side view, partly in section, of part of a seat assembly in a vehicle body;
Figure 2 is a diagrammatic side view, partly in section, of a spring catch forming part of the seat assembly;
Figure 3 is an enlarged side view of part of the spring catch;
Figure 4 is a view in the direction of arrow IV in Figure 3;
Figure 5 is a view in the direction of arrow V in Figure 3;
Figure 6 is a perspective view of a bracket forming part of the seat assembly; and
Figure 7 is a perspective view of a modified bracket.

The seat assembly illustrated is provided in a hatchback or estate car in which the rear seat is split and the seat cushions (seat bases) are each tiltable upwardly and forwardly so as to leave a space into which the corresponding seat back can be tilted downwardly and forwardly in order to extend the available luggage space. Alternatively a single seat cushion and a single seat back may be provided across the width of the vehicle.

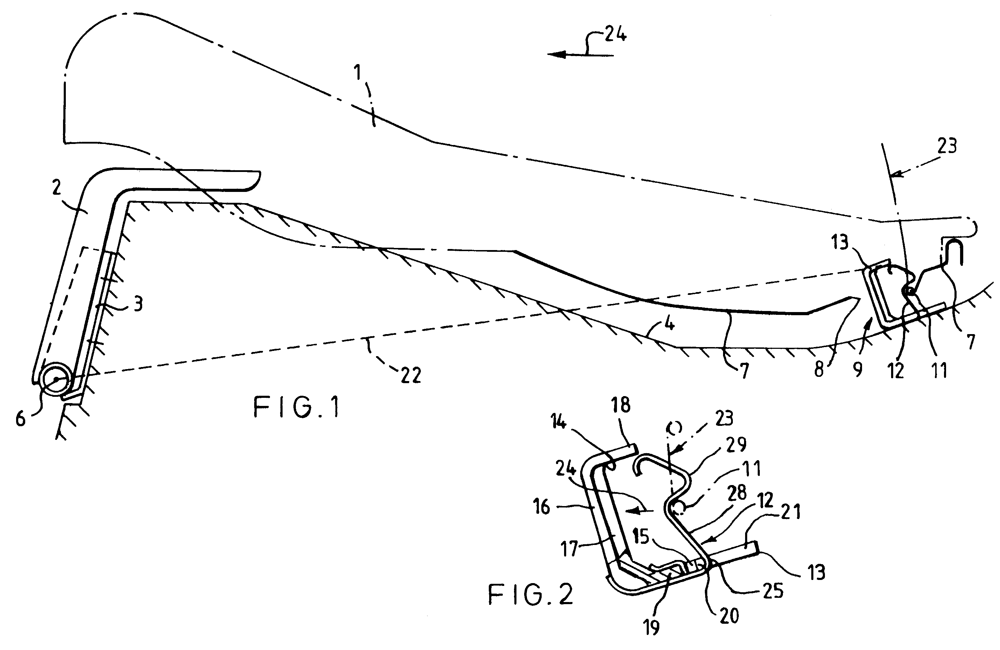

The or each seat cushion 1, whose outline is indicated in chain line in Figure 1, has its front end portion mounted on a pair of L-shaped brackets 2 (only one of which is visible) which are hinged to brackets 3 bolted or welded to a front-facing part of a rear floor pan 4 of the vehicle body. Thus the seat cushion 1 is pivotable about a transverse hinge axis 6, below the front of the seat cushion, from the normal (sitting) position shown in Figure 1. The seat cushion 1 comprises a skin-covered body of plastics foam and a metal base or cushion pan 7 with apertures 8 (only one of which is visible) for accommodating retaining means 9 for holding the seat cushion 1 in the normal position. The rear floor pan 4 defines a well which accommodates the seat pan 7, and the seat cushion 1 has relatively little thickness at the rear, with the result that the space available for the retaining means 9 is severely limited. To maximise the forward throw of the seat cushion 1 when it is tilted forwards, the hinge axis 6 is located as low as possible and lies below the level of the retaining means 9.

Each retaining means 9 includes, on the one hand, a striker 11 constituted by a reinforcing wire pin (e.g. 5 mm diameter) extending across the rear edge of the aperture 8; if the cushion pan 7 is of sufficient strength and stiffness, the reinforcing pin may be omitted, so that the rear edge serves as the striker. On the other hand, the retaining means 9 includes a latching mechanism constituted by a spring catch comprising a spring clip 12 fitted on a bracket 13 which is fixed (e.g. welded) to the floor pan 4.

The bracket 13 defines a rearwardly facing recess 14 and includes a front web 16 with an internal embossment 17 projecting into the recess 14, to enhance rigidity. An optional short upper flange 18, extending further from the edge of the recess 14, overlaps the upper end of the spring clip 12 and a long lower flange 19 has a cut-out 21 through which the clip 12 extends.

In Figure 1, the broken line 22 is an imaginary straight line passing through the hinge axis 6 and tangential to the upper end of the spring clip 12. In Figures 1 and 2, the chain line 23 indicates the arc of movement of the centre of the striker 11 when the seat cushion 1 is tilted about the axis 6, and the arrow 24 indicates the direction of the main inertial force acting on the seat cushion 1 and hence on the striker 11 when the vehicle is involved in a head-on collision. The primary effect of this force will be to move the seat cushion 1 horizontally forwards this may result from, for example, yielding of the connection between the seat cushion 1, the bracket 2, the bracket 3, and the floor pan 4 at one or more places or flexing of the seat pan 7. Secondarily, there will be a tendency for the seat cushion to tilt because of the moment of the inertial force acting on the centre of gravity of the seat cushion above the level of the hinge axis 6.

The spring clip 12 serves as a yieldable catch for the striker 11 in normal use of the seat assembly, including manual tilting of the seat cushion 1 to and from its normal position, but cooperates with the recess 14 of the bracket 13 to serve as a rigid catch during a head-on collision. The flange 18 may also serve as an extra guide, in a appropriate seat cushion/hinge arrangement to guide the upper end of the clip 12 towards the recess 14 to further ensure the coupling between the two parts, but it may be omitted if the configurations of the bracket 13 and the clip 12 are appropriately designed to ensure their coupling under the given seat cushion/hinge arrangement.

The clip 12 is fabricated from spring steel strip (or other resilient sheet material) and includes a base 26 which extends under the bracket 13 and which has a clamping portion 27 for engaging the lower flange 19. The clamping portion 27 extends through a narrow recess 15 in the cut-out 21 of the bracket 13, which recess assists in locating the clip 12 and keeping it in the required orientation (without twisting) when loaded. The front edge portion 26a of the base 26 is bent upwards so that it fits the bracket 13 snugly, while allowing the bracket to be fixed squarely and securely to the floor pan 4, sandwiching the base 26. This maximises contact between the bracket 13 and the base 26, minimising twisting of the clip 12 under loads applied by the striker 11.

A cantilever leaf spring portion 28 extends upwards and forwards from the base 26 and its free upper end connects with a rearwardly projecting catching portion 29. A knee 25 connects the leaf spring portion 28 to the base 26 and is spaced from the adjacent rear surface 20 (in the cut-out 21) of the bracket 13, in order to minimise stresses in the spring clip 12 as it flexes at the knee 25.

The catching portion 29 has a downwardly and rearwardly inclined upper surface 31 and an upwardly and rearwardly inclined lower surface 32, connected by a convex nose 33. The catching portion 29 defines a rebate 34 for receiving the striker 11 when the seat cushion 1 is in its normal position. In the normal position, when received in the rebate 34, the striker 11 does not bear against the leaf spring portion 28 (and preferably also does not bear against the catching portion 29), thereby avoiding continual flexing of the knee 25 during passenger occupancy of the seat.

The upper end of the catching portion 29 has a downwardly bent lip 36, which extends under the rear edge of the upper flange 18 of the bracket 13, and has a recess 37. It will be noted that the optional upper flange 18 also serves as a protective shroud for the clip 12 when the clip is exposed, e.g. when the seat cushion has been tilted forwards to convert the vehicle into a "hatch" condition to maximise its load capacity.

When the seat cushion 1 is lowered into its normal position, the striker 11 rides down over the upper surface 31 and the leaf spring portion 28 yields, primarily by flexing of the knee 25, allowing the catching portion 29 to be displaced forwards (without being deformed) until the striker 11 passes over the nose 33 and is received in the rebate 34.

To tilt the seat cushion 1 upwardly and forwardly, one simply pulls up the rear edge portion of the seat cushion, until the leaf spring portion 29 yields and allows the striker 11 to disengage from the rebate 34 and pass over the nose 33.

In the event of rapid deceleration of the vehicle, e.g. in a head-on collision, however, the striker 11 moves (relative to the vehicle body) predominently in the direction of the arrow 24. This drives the catching portion 29 back into the recess 14 in the bracket 13, the clip 12 flexing at the knee 25 and the upper parts remaining relatively undistorted, until the bent lip 36 engages against the front web 16 (about 2/3 up the web 16). The result is that the catching portion 29 becomes substantially rigid and the striker 11 cannot force its way past the catching portion 29 along the arc 23. The upper parts of the clip 12, particularly the rebate 34 and the surface 32, are dimensioned so as to ensure that the clip 12 flexes at the knee 25 with minimal distortion of the other parts, in order to ensure that the striker 11 remains in the rebate 34 and does not ride over the nose 33.

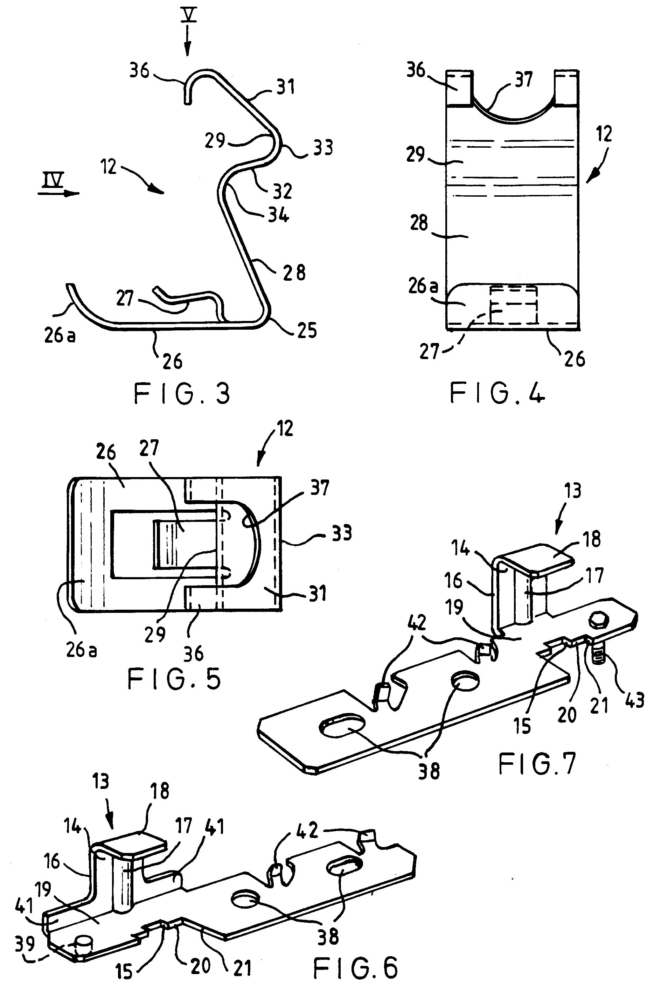

The bracket 13 shown in Figure 6 has its lower flange 19 extended on one side to accommodate holes 38 for receiving fixing bolts and on the other side to accommodate a downwardly projecting pin 39 (or lug) to assist orientation of the bracket (and therefore the clip 12) relative to the floor and relative to the striker 11, which is critical for the clip 12 and the bracket 13 to function properly as a rigid catch withstanding a front impact force. A reinforcing web 41 is located on at least one side of the front web 16 to give the bracket additional stiffness. The bolts (not shown) which fix the bracket 13 can be used to fix a seat-belt anchorage (not shown), the bracket having lugs 42 which prevent twisting of the anchorage during fixing.

Figure 7 shows a modified bracket, lacking the reinforcing webs 41. This bracket receives an additional bolt 43 in the flange extension remote from the larger extension having the holes 38, to provide sufficient rigidity.

Various modifications may be made within the scope of the invention. For instance, the retaining means 9 may be inverted, the latching mechanism (12,13) being mounted on the seat pan 7 and the striker 11 being mounted on the floor pan 4.

## Claims

1. A latch mechanism for a vehicle seat assembly having a seat cushion (1) pivotally mounted on a vehicle body about a pivot axis (6) below the front of the seat cushion (1) so as to be upwardly and forwardly tiltable from a normal position, the latch mechanism comprising a resilient catch member (12) having a displaceable catching portion (29) for mutual engagement and disengagement of a striker (11) by pivoting of the seat cushion (1) about the pivot axis (6), and limiting means (13) for preventing disengagement of the striker (11) from the catching portion (29) with forward movement of the seat cushion (1) relative to the vehicle body, characterised in that the catch member (12) comprises a cantilever leaf spring (28) which is flexible in the region of its fixed end about an axis substantially parallel to the pivot axis (6) during engagement and disengagement of the striker (11), the catching portion (29) being mounted on the free end of the cantilever leaf spring (28) so as to define a rebate (34) for engaging the striker (11) between the catching portion (29) and the leaf spring (28), the limiting means (13) being arranged to cooperate with and limit displacement of the catching portion (29) to prevent disengagement of the striker (11) with forward movement of the seat cushion (1).

2. A latch mechanism as claimed in claim 1, in which the catching portion (29) is integral with the leaf spring (28).

3. A latch mechanism as claimed in claim 2, in which the leaf spring (28) and the catching portion (29) are constituted by a spring clip (12) formed from resilient sheet material.

4. A latch mechanism as claimed in claim 3, in which the spring clip (12) has a base (26) which is fixed relative to the limiting means (13) and which is connected to the leaf spring (28) by a curved knee (25) at which flexing of the spring clip (12) takes place during engagement and disengagement of the striker (11).

5. A latch mechanism as claimed in claim 4, in which the knee (25) is spaced from the limiting means (13) so as to avoid contact therewith during flexing.

6. A latch mechanism as claimed in claim 4 or 5, in which the base (26) of the spring clip (12) has a clamping portion (27) for engaging the limiting means (13), the clamping portion preferably extending through a locating recess (15) in the limiting means (13).

7. A latch mechanism as claimed in any preceding claim, in which the catching portion (29) has inclined upper and lower surfaces (31,32) connected by a convex nose (33).

8. A latch mechanism as claimed in any preceding claim, in which the catching portion (29) has a curved surface (36) for cooperation with the limiting means (13).

9. A latch mechanism as claimed in any preceding claim, in which the limiting means comprises a bracket (13) having an upstanding member (16) for cooperating with the catching portion (29) to limit its displacement.

10. A latch member as claimed in claim 9, in which the bracket (13) defines a recess (14) for receiving the catching portion (29).

11. A latch mechanism as claimed in claim 9 or 10, in which the upstanding member comprises a web (16), preferably having a longitudinal embossment (17) to enhance its rigidity.

12. A latch mechanism as claimed in claim 11, in which the web (16) has a terminal flange (18) extending towards the catching portion (29).

13. A latch mechanism as claimed in claim 11 or 12, in which the web (16) has at least one lateral extension (41).

14. A latch mechanism as claimed in any of claims 9 to 13, in which the bracket (13) includes a base flange (19) for fixing the bracket, the catch member (12) being mounted on the base flange (19) and preferably extending under it.

15. A latch mechanism as claimed in claim 14, in which the catch member (12) extends through a cut-out (21) in the base flange (19).

16. A latch mechanism as claimed in claim 14 or 15, in which the base flange (19) extends laterally beyond the upstanding member (16), at least to one side thereof.

17. A latch mechanism as claimed in claim 16, in which, to one side of the upstanding member (16), the base flange (19) has holes (38) for receiving fixing bolts.

18. A latch mechanism as claimed in claim 17, in which, to the other side of the upstanding member (16), the base flange (19) has a locating pin or lug (39)or a hole for receiving a further fixing bolt (43).

19. A seat assembly in a vehicle body, having a seat cushion (1) which is pivotally mounted on the vehicle body about a pivot axis (6) below the front of the seat cushion (1) so as to be upwardly and forwardly tiltable from a normal position, and retaining means (9) for holding the seat cushion (1) in the normal position, the retaining means (9) being spaced rearwardly of the pivot axis (6) and comprising two parts respectively mounted on the seat cushion and the vehicle body, one of the said two parts comprising a striker (11), characterised in that the other part comprises a latch mechanism according to any preceding claim.

20. A seat assembly as claimed in claim 19, in which the said one part is on the seat cushion (1) and the said other part is on the vehicle body.

21. A seat assembly as claimed in claim 20, in which the striker (11) is constituted by a rear edge portion of an aperture (8) in the seat cushion (1), the rear edge portion preferably comprising a reinforcing member.

22. A seat assembly as claimed in claim 21, in which the aperture (8) is formed in a cushion pan (7) of the seat cushion (1), and the said other part of the retaining means (9) is fixed on a floor pan (4) of the vehicle body.

23. A seat assembly as claimed in any of claims 20 to 22, in which the said other part and a seat-belt anchorage are fixed to the vehicle body at the same location by fixing means common to both.

24. A seat assembly as claimed in any of claims 19 to 23, in which the pivot axis (6) is below the level of the retaining means (9).

## Patentansprüche

1. Verriegelungsmechanismus für die Sitzeinheit eines Fahrzeugs, die ein Sitzpolster (1) hat, das drehbar um eine Gelenkachse (6) unter der Vorderseite des Sitzpolsters (1) an der Karosserie eines Fahrzeugs angebracht ist, um aus der normalen Stellung nach vorn und oben gekippt werden zu können, wobei der Verriegelungsmechanismus ein elastisches Arretierelement (12) umfaßt, das einen verschiebbaren Arretierabschnitt (29) zum gegenseitigen Ineinandergreifen und Lösen mit einer Sperre (11) durch Schwenken des Sitzpolsters (1) um die Gelenkachse (6) und ein Begrenzungsmittel (13) zur Verhinderung des Lösens der Sperre (11) aus dem Arretierabschnitt (29) bei der Vorwärtsbewegung des Sitzpolsters (1) im Verhältnis zur Karosserie des Fahrzeugs hat, dadurch gekennzeichnet, daß das Arretierelement (12) eine einseitig eingespannte Blattfeder (28) umfaßt, die während des Eingriffs und des Lösens der Sperre (11) im Bereich ihres feststehenden Endes um eine Achse biegsam ist, die im wesentlichen parallel zur Gelenkachse (6) verläuft, wobei der Arretierabschnitt (29) am freien Ende der einseitig eingespannten Blattfeder (28) angebracht ist, um so einen Falz (34) zu bilden, um die Sperre (11) zwischen dem Arretierabschnitt (29) und der Blattfeder (28) einzurücken, wobei das Begrenzungsmittel (13) so angeordnet ist, daß es mit dem Arretierabschnitt (29) zusammenwirken und dessen Verschiebung begrenzen kann, um das Lösen der Sperre (11) bei der Vorwärtsbewegung des Sitzpolsters (1) zu verhindern.

2. Verriegelungsmechanismus nach Anspruch 1, bei dem der Arretierabschnitt (29) mit der Blattfeder (28) aus einem Stück besteht.

3. Verriegelungsmechanismus nach Anspruch 2, bei dem die Blattfeder (28) und der Arretierabschnitt (29) durch eine Federklammer (12) gebildet werden, die aus einem elastischen Blechmaterial hergestellt wird.

4. Verriegelungsmechanismus nach Anspruch 3, bei dem die Federklammer (12) ein Unterteil (26) hat, das im Verhältnis zum Begrenzungsmittel (13) feststeht und das mit der Blattfeder (28) durch einen gekrümmten Winkelabschnitt (25) verbunden ist, an dem während des Eingriffs und des Lösens der Sperre (11) das Biegen der Federklammer (12) erfolgt.

5. Verriegelungsmechanismus nach Anspruch 4, bei dem der Winkelabschnitt (25) im Abstand zum Begrenzungsmittel (13) angeordnet ist, um während des Biegens den Kontakt mit diesem zu vermeiden.

6. Verriegelungsmechanismus nach Anspruch 4 oder 5, bei dem das Unterteil (26) der Federklammer (12) einen Klemmabschnitt (27) zum Ineinandergreifen mit dem Begrenzungsmittel (13) hat, wobei sich der Klemmabschnitt vorzugsweise durch eine Fixieraussparung (15) im Begrenzungsmittel (13) erstreckt.

7. Verriegelungsmechanismus nach einem der vorhergehenden Ansprüche, bei dem der Arretierabschnitt (29) geneigte obere und untere Flächen (31, 32) hat, die durch eine konvexe Nase (33) verbunden werden.

8. Verriegelungsmechanismus nach einem der vorhergehenden Ansprüche, bei dem der Arretierabschnitt (29) eine gekrümmte Fläche (36) zum Zusammenwirken mit dem Begrenzungsmittel (13) hat.

9. Verriegelungsmechanismus nach einem der vorhergehenden Ansprüche, bei dem das Begrenzungsmittel eine Halterung (13) umfaßt, die ein hochstehendes Element (16) zum Zusammenwirken mit dem Arretierabschnitt (29) hat, um dessen Verschiebung zu begrenzen.

10. Verriegelungsmechanismus nach Anspruch 9, bei dem die Halterung (13) eine Aussparung (14) zur Aufnahme des Arretierabschnitts (29) bildet.

11. Verriegelungsmechanismus nach Anspruch 9 oder 10, bei dem das hochstehende Element einen Steg (16) umfaßt, der vorzugsweise einen hohlgeprägten Abschnitt (17) hat, um dessen Steifigkeit zu erhöhen.

12. Verriegelungsmechanismus nach Anspruch 11, bei dem der Steg (16) einen Endflansch (18) hat, der sich hin zum Arretierabschnitt (29) erstreckt.

13. Verriegelungsmechanismus nach Anspruch 11 oder 12, bei dem der Steg (16) wenigstens eine seitliche Weiterführung (41) hat.

14. Verriegelungsmechanismus nach einem der Ansprüche 9 bis 13, bei dem die Halterung (13) einen Basisflansch (19) zur Befestigung der Halterung einschließt, wobei das Arretierelement (12) am Basisflansch (19) befestigt ist und vorzugsweise unter diesem verläuft.

15. Verriegelungsmechanismus nach Anspruch 14, bei dem das Arretierelement (12) durch einen Ausschnitt (21) im Basisflansch (19) verläuft.

16. Verriegelungsmechanismus nach Anspruch 14 oder 15, bei dem sich der Basisflansch (19) zumindest auf einer seiner Seiten seitlich bis über das hochstehende Element (16) hinaus erstreckt.

17. Verriegelungsmechanismus nach Anspruch 16, bei dem der Basisflansch (19) auf einer Seite des hochstehenden Elements (16) Löcher (38) zur Aufnahme von Befestigungsbolzen hat.

18. Verriegelungsmechanismus nach Anspruch 17, bei dem der Basisflansch (19) auf der anderen Seite des hochstehenden Elements (16) einen Fixierstift oder Vorsprung (39) oder ein Loch zur Aufnahme eines weiteren Befestigungsbolzens (43) hat.

19. Sitzeinheit in der Karosserie eines Fahrzeugs, die ein Sitzpolster (1) hat, das drehbar um eine Gelenkachse (6) unter der Vorderseite des Sitzpolsters (1) an der Karosserie eines Fahrzeugs angebracht ist, um aus der normalen Stellung nach oben und vorn gekippt werden zu können, und Haltemittel (9) zum Halten des Sitzpolsters (1) in der normalen Stellung, wobei die Haltemittel (9) im Abstand hinter der Gelenkachse (6) angeordnet sind und zwei Teile umfassen, die jeweils am Sitzpolster bzw. an der Karosserie des Fahrzeugs angebracht sind, wobei eines der beiden Teile eine Sperre (11) umfaßt, dadurch gekennzeichnet, daß das andere Teil einen Verriegelungsmechanismus nach einem der vorhergehenden Ansprüche umfaßt.

20. Sitzeinheit nach Anspruch 19, bei der sich das eine Teil am Sitzpolster (1) und das andere Teil an der Karosserie des Fahrzeugs befindet.

21. Sitzeinheit nach Anspruch 20, bei der die Sperre (11) durch einen hinteren Randabschnitt einer Öffnung (8) im Sitzpolster (1) gebildet wird, wobei der hintere Randabschnitt vorzugsweise ein Verstärkungselement umfaßt.

22. Sitzeinheit nach Anspruch 21, bei der die Öffnung (8) in einer Sitzpolsterwanne (7) des Sitzpolsters (1) gebildet wird und das andere Teil der Haltemittel (9) an einem Bodenblech (4) der Karosserie des Fahrzeugs befestigt ist.

23. Sitzeinheit nach einem der Ansprüche 20 bis 22, bei welcher das andere Teil und eine Verankerung für den Sicherheitsgurt durch Befestigungsmittel, die beiden gemeinsam sind, an derselben Stelle der Karosserie des Fahrzeugs befestigt werden.

24. Sitzeinheit nach einem der Ansprüche 19 bis 23, bei der sich die Gelenkachse (6) unter der Ebene der Haltemittel (9) befindet.

## Revendications

1. Dispositif de verrouillage pour un assemblage de siège de véhicule comprenant un coussin de siège (1) monté de manière pivotante sur une carrosserie de véhicule autour d'un axe de pivotement (6) situé sous l'avant du coussin de siège (1), de manière à pouvoir être basculé vers le haut et vers l'avant à partir d'une position normale, le dispositif de verrouillage comprenant un élément de verrouillage élastique (12) pourvu d'une partie à encliquetage mobile (29) servant à l'enclenchement et au désenclenchement réciproques d'un pêne (11) sous l'effet du pivotement du coussin de siège (1) autour de l'axe de pivotement (6), et un moyen de limitation (13) servant à empêcher le désenclenchement du pêne (11) de la partie à encliquetage (29) en cas de mouvement vers l'avant du coussin de siège (1) par rapport à la carrosserie du véhicule, caractérisé en ce que l'élément de verrouillage (12) comprend un ressort à lame en porte-à-faux (28) qui est flexible, dans la région de son extrémité fixe, autour d'un axe sensiblement parallèle à l'axe de pivotement (6) pendant l'enclenchement et le désenclenchement du pêne (11), la partie à encliquetage (29) étant montée sur l'extrémité libre du ressort à lame en porte-à-faux (28), de manière à définir une feuillure (34) pour l'enclenchement du pêne (11) entre la partie à encliquetage (29) et le ressort à lame (28), le moyen de limitation (13) étant prévu pour coopérer avec la partie à encliquetage (29) et limiter le déplacement de cette dernière afin d'empêcher le désenclenchement du pêne (11) en cas de mouvement vers l'avant du coussin de siège (1).

2. Dispositif de verrouillage selon la revendication 1, dans lequel la partie à encliquetage (29) est solidaire avec le ressort à lame (28).

3. Dispositif de verrouillage selon la revendication 2, dans lequel le ressort à lame (28) et la partie à encliquetage (29) sont formées par une attache à ressort (12) formée dans un matériau élastique en feuille.

4. Dispositif de verrouillage selon la revendication 3, dans lequel l'attache à ressort (12) est pourvue d'une base (26) qui est fixe par rapport au moyen de limitation (13) et qui est reliée au ressort à lame (28) par un coude courbé (25) au niveau duquel a lieu le fléchissement de l'attache à ressort (12) pendant l'enclenchement et le désenclenchement du pêne (11).

5. Dispositif de verrouillage selon la revendication 4, dans lequel le coude (25) est situé à distance du moyen de limitation (13), de manière à éviter le contact avec celui-ci pendant le fléchissement.

6. Dispositif de verrouillage selon la revendication 4 ou 5, dans lequel la base (26) de l'attache à ressort (12) est pourvue d'une partie de serrage (27) servant à s'engager dans le moyen de limitation (13), la partie de serrage s'étendant, de préférence, à travers un évidement de positionnement (15) dans le moyen de limitation (13).

7. Dispositif de verrouillage selon l'une quelconque des revendications précédentes, dans lequel la partie à encliquetage (29) est pourvue de surfaces supérieure et inférieure inclinées (31, 32) reliées par un nez convexe (33).

8. Dispositif de verrouillage selon l'une quelconque des revendications précédentes, dans lequel la partie à encliquetage (29) est pourvue d'une surface courbée (36) en vue de coopérer avec le moyen de limitation (13).

9. Dispositif de verrouillage selon l'une quelconque des revendications précédentes, dans lequel le moyen de limitation comprend un support (13) pourvu d'un élément vertical (16) servant à coopérer avec la partie à encliquetage (29) pour limiter son déplacement.

10. Dispositif de verrouillage selon la revendication 9, dans lequel le support (13) définit une cavité (14) pour recevoir la partie à encliquetage (29).

11. Dispositif de verrouillage selon la revendication 9 ou 10, dans lequel l'élément vertical comprend une paroi (16), de préférence pourvue d'un relief longitudinal (17) pour augmenter sa rigidité.

12. Dispositif de verrouillage selon la revendication 11, dans lequel la paroi (16) est pourvue d'une bride terminale (18) s'étendant vers la partie à encliquetage (29).

13. Dispositif de verrouillage selon la revendication 11 ou 12, dans lequel la paroi (16) est pourvue d'au moins une extension latérale (41).

14. Dispositif de verrouillage selon l'une quelconque des revendications 9 à 13, dans lequel le support (13) comprend une bride de base (19) pour fixer le support, l'élément de verrouillage (12) étant monté sur la bride de base (19) et s'étendant, de préférence, sous celle-ci.

15. Dispositif de verrouillage selon la revendication 14, dans lequel l'élément de verrouillage (12) s'étend à travers une découpure (21) située dans la bride de base (19).

16. Dispositif de verrouillage selon la revendication 14 ou 15, dans lequel la bride de base (19) s'étend latéralement au-delà de l'élément vertical (16), au moins sur un côté de celui-ci.

17. Dispositif de verrouillage selon la revendication 16, dans lequel, sur un côté de l'élément vertical (16), la bride de base (19) est pourvue de trous (38) pour recevoir des boulons de fixation.

18. Dispositif de verrouillage selon la revendication 17, dans lequel, sur l'autre côté de l'élément vertical (16), la bride de base (19) est pourvue d'un goujon d'assemblage ou oreille (39) ou d'un trou pour recevoir un autre boulon de fixation (43).

19. Assemblage de siège dans une carrosserie de véhicule, comprenant un coussin de siège (1) qui est monté de manière pivotante sur la carrosserie du véhicule autour un axe de pivotement (6) situé sous l'avant du coussin de siège (1), de manière à pouvoir être basculé vers le haut et vers l'avant à partir d'une position normale, et un moyen de retenue (9) pour maintenir le coussin de siège (1) dans la position normale, le moyen de retenue (9) étant situé en retrait à l'arrière de l'axe de pivotement (6) et comprenant deux parties montées, respectivement, sur le coussin de siège et la carrosserie du véhicule, l'une des deux dites parties comprenant un pêne (11), caractérisé en ce que l'autre partie comprend un dispositif de verrouillage selon l'une quelconque des revendications précédentes.

20. Assemblage de siège selon la revendication 19, dans lequel ladite une partie est située sur le coussin de siège (1) et ladite autre partie est située sur la carrosserie du véhicule.

21. Assemblage de siège selon la revendication 20, dans lequel le pêne (11) est formé par une partie de bord postérieur d'une ouverture (8) dans le coussin de siège (1), la partie de bord postérieur comprenant, de préférence, un élément de renforcement.

22. Assemblage de siège selon la revendication 21, dans lequel l'ouverture (8) est formée dans un bac de coussin (7) du coussin de siège (1), et ladite autre partie du moyen de retenue (9) est fixée sur une tôle de plancher (4) de la carrosserie du véhicule.

23. Assemblage de siège selon l'une quelconque des revendications 20 à 22, dans lequel ladite autre partie et un dispositif d'ancrage des ceintures de sécurité sont fixés sur la carrosserie du véhicule, au même endroit, grâce à des moyens de fixation qui sont communs aux deux.

24. Assemblage de siège selon l'une quelconque des revendications 19 à 23, dans lequel l'axe de pivotement (6) est situé sous le niveau du moyen de retenue (9).
